# FASCICULE DE BREVET EUROPEEN

(11) **EP 1 010 557 B1**
(45) Date de publication et mention de la délivrance du brevet: **09.02.2005**
(21) Numéro de dépôt: 99403141.7
(22) Date de dépôt: 14.12.1999
(51) Int. Cl.: B60J 5/04

(54) **Porte de véhicule avec module d'équipements étanche et médaillon amovible dans le panneau de garnissage**
Fahrzeugtür mit abgedichtem Ausrüstungsmodul und entfernbarem Medaillon in der Innenverkleidung
Vehicle door with sealed equipment module and removable plate in the trim panel

(30) Priorité: 15.12.1998 FR 9815840
(43) Date de publication de la demande: 21.06.2000
(73) Titulaire: ArvinMeritor Light Vehicle Systems-France, 45600 Sully sur Loire (FR)
(72) Inventeur: Delire, Philippe, 72170 Beaumont sur Sarthe (FR); Laurent, Bruno, 45110 Chateauneuf sur Loire (FR)
(74) Mandataire: Jacobson, Claude

(56) Documents cités:
- DE-A- 19 528 467
- DE-A- 19 709 835
- FR-A- 2 648 762
- US-A- 5 617 676
- US-A- 5 715 630

## Description

La présente invention a pour objet une porte de véhicule automobile dans une face intérieure de laquelle est agencée une ouverture, cette porte comprenant un module muni d'équipements dont une serrure et un lève-vitre à au moins un rail de guidage de câbles. Le module inclut un panneau intérieur de garnissage sur lequel sont montés lesdits équipements.

On connaît par le brevet FR-A-89 08 550 (2 648 762) une porte de véhicule comprenant un panneau formant une structure intérieure, et un panneau intérieur de garnissage muni de divers équipements venant s'appliquer sur la structure intérieure.

Le système de maintien du rail du lève-vitre sur le panneau peut être flexible, le rail est fixé à son extrémité inférieure à un support, et monté à sa partie supérieure avec une liberté de débattement dans une direction transversale au plan général du module. La serrure, solidarisée avec une patte latérale fixée à l'un des rails du lève-vitre, vient prendre place derrière le panneau intérieur de la porte dans lequel est agencé l'ouverture latérale. Cette serrure est reliée par des tringleries à un dispositif de commande d'ouverture intérieure de la porte, ce dispositif étant habituellement fixé au panneau intérieur de la porte au-dessus de l'ouverture latérale.

Une fois le module de porte mis en place, il est fixé au panneau intérieur de la porte par des moyens appropriés (vis) grâce à une ouverture agencée dans la partie supérieure du panneau intérieur de garnissage pour permettre l'introduction d'outils de vissage.

Dans l'agencement de porte selon US-A-5617676, la serrure est montée, en combinaison avec d'autres mécanismes, comme par example les organes de lève-vitre, sur un panneau séparé mais lui-même recouvert par un habillage intérieur.

Ces agencements connus présentent l'inconvénient suivant : si après montage et fixation du panneau intérieur de garnissage avec ses équipements, l'opérateur désire accéder à la serrure, au lève-vitre, au moteur ou à son électronique, il est obligé de démonter la totalité du panneau intérieur de garnissage, ce qui constitue une opération longue et fastidieuse.

L'invention a pour but de proposer une porte de véhicule modifiée de façon à éliminer cet inconvénient.

Conformément à l'invention, la porte est caractérisée en ce que dans la partie supérieure du panneau est ménagée une ouverture sur le pourtour de laquelle peut s'appliquer de manière amovible un médaillon complémentaire constitutif dudit panneau, et auquel est fixé un support de la serrure.

Ainsi après fixation du panneau intérieur de garnissage et de l'ensemble de ses équipements au panneau intérieur de la porte, dont la serrure, il et possible d'accéder à celle-ci et de l'extraire sans difficulté de la porte par simple démontage du médaillon amovible.

Ce démontage du médaillon ne soulève aucune difficulté particulière. Suivant une particularité de l'invention, le support de la serrure est une patte latérale solidarisée avec le médaillon et sur l'extrémité de laquelle est montée la serrure.

Suivant une autre caractéristique de l'invention, la commande d'ouverture intérieure de la serrure est avantageusement montée sur le médaillon.

Cette commande d'ouverture intérieure étant reliée à la serrure par une tringlerie d'actionnement, le démontage du médaillon permet d'extraire de la porte simultanément la serrure et sa commande d'ouverture intérieure.

D'autres particularités et avantages de l'invention apparaîtront au cours de la description qui va suivre, faite en référence aux dessins annexés qui en illustrent une forme de réalisation à titre d'exemple non limitatif.

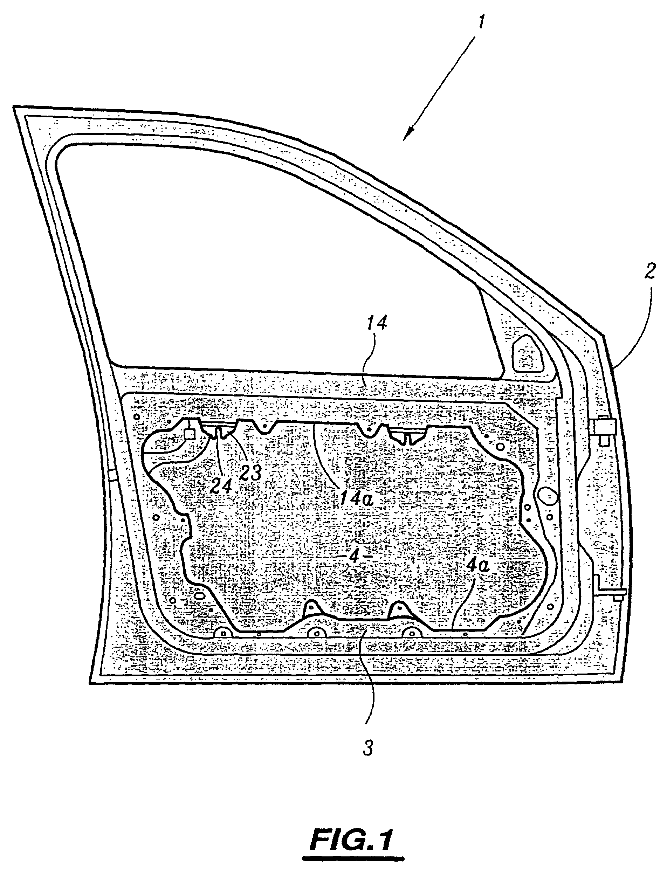

La figure 1 est une vue en élévation à échelle réduite d'une porte avant gauche de véhicule du côté intérieur, sans son module de porte étanche et montrant l'ouverture de montage de celui-ci.

La figure 2 est une vue en perspective d'une forme de réalisation du module de porte selon l'invention adapté pour pouvoir être monté sur la porte de la figure 1, ce module étant représenté du côté de son panneau intérieur d'étanchéité.

La figure 3 est une vue en coupe transversale verticale suivant 3/3 de la figure 2, montrant la phase finale du montage du module sur la porte de la figure 1.

La figure 4 est une vue en perspective éclatée partielle à échelle agrandie du panneau intérieur de la porte de la figure 1, de la serrure extraite de celui-ci et du panneau intérieur de garnissage lorsque ce dernier et le médaillon sont solidaires.

La porte 1 de véhicule illustrée aux dessins comprend un panneau extérieur 2 et un panneau intérieur 3 dans lequel est agencée une ouverture latérale 4. La structure de la porte 1 est complétée par un module de porte 5 constitué d'un panneau intérieur 20 de garnissage et d'étanchéité, réalisé en une matière plastique appropriée, et de divers équipements notamment : un lève-vitre 6 du type à deux rails 7, 8 à peu près parallèles et verticaux prévus pour le guidage de la vitre ainsi qu'une serrure 30.

Le panneau intérieur 20 est convenablement profilé de manière à présenter un accoudoir 12 et un vide-poches 13. Il est dimensionné de manière que son pourtour puisse venir s'appliquer de manière étanche sur la périphérie de l'ouverture 4, laquelle est délimitée à sa partie supérieure par un bandeau 14 de renforcement de la structure de la porte 1, ce bandeau présentant un bord inférieur 14a. Les rails 7, 8 sont flexibles et fixés à leur extrémité inférieure à un support 15 constitué par un profilé métallique adapté pour recevoir des vis 16 de fixation à la base du panneau intérieur 3, associées à des écrous 27. Sur le profilé 15 est également monté le panneau intérieur de garnissage 20.

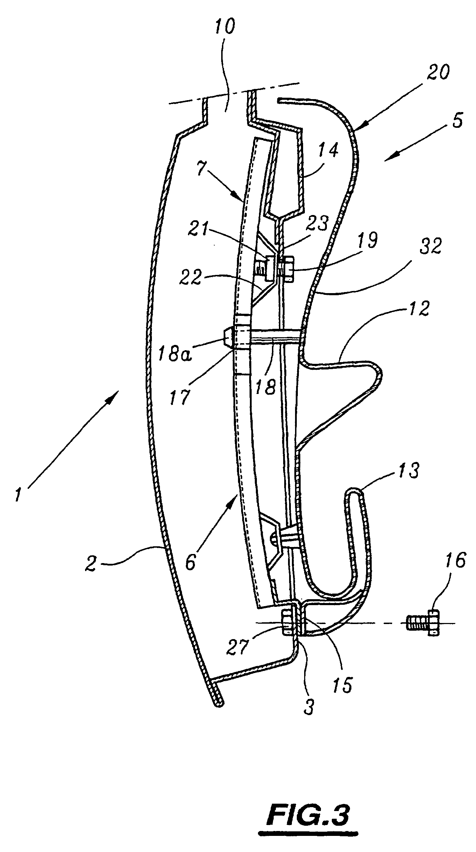

Les rails 7, 8 sont reliés au panneau 20 avec possibilité de débattement de leur partie supérieure dans le sens transversal. A cet effet le module 5 est équipé (figure 3) de goujons de retenue 18, fixés au panneau de garnissage 20 à un emplacement approprié, par exemple au dessus de l'accoudoir 12 et au-dessous du médaillon 32. L'extrémité du goujon 18 opposée au panneau 20 s'engage dans un trou 17 de réception, agencé dans le rail 7. La tête 18a du goujon 18 étant élargie, vient s'appliquer sur une collerette du trou 17 lorsque les rails 7, 8 sont écartés au maximum du panneau 20 (figure 3). Ainsi le goujon 18 assure la retenue de l'ensemble du lève-vitre 6 dans cette position.

Par contre lorsque les rails 7, 8 fléchissent autour de leurs articulations sur leurs attaches inférieures au niveau du support 15, et se rapprochent du panneau 20, la tête 18a sort du trou 17 et le rail 7 coulisse sur le goujon 18 en se rapprochant du panneau 20. Cet agencement permet dont d'écarter ou de rapprocher les rails 7, 8 du panneau 20 suivant une amplitude définie par la longueur du goujon 18.

Dans la partie supérieure du panneau intérieur de garnissage 20, est ménagée une ouverture 31 sur le pourtour de laquelle peut s'appliquer, de manière amovible, un médaillon complémentaire 32 constitutif du panneau 20 et auquel est fixé un support de la serrure 30 constitué par une patte latérale 24. La patte 24 peut aussi faire partie intégrante du médaillon 32 auquel cas elle sera issue d'un procédé dit de moulage ou du type « injection ».

A l'une de ses extrémités la patte 24 est solidarisée avec la serrure 30, et à son extrémité opposée elle est fixée à la face intérieure du médaillon 32 par tout moyen connu en soi tel que par exemple des vis. Le médaillon 32 peut être fixé sur son pourtour au bord de l'ouverture 31 également par tout moyen approprié connu en soi, tel que par exemple clippage, soudage, collage...

La serrure 30 est reliée à un dispositif de commande d'ouverture intérieure 33 avantageusement fixé à la face intérieure du médaillon 32 et relié à la serrure 30 par une tringlerie d'actionnement 34 connue en soi et schématiquement représentée.

Au dessus du goujon 18, la partie supérieure de chaque rail 7, 8 est équipée d'un système vis 19-écrou 21 montés sur un profilé 22 de support traversé par la vis 19, ce profilé 22 étant fixé au rail respectif 7, 8. La tête de la vis 19 peut donc être écartée ou rapprochée du profilé 22. Des fourchettes 23 délimitent des encoches respectives 24 sur le bord 14a de l'ouverture 4. Les fourchettes 23 font saillie du bord 14a en direction des vis 19, afin que celles-ci puissent être introduites dans les encoches 24, puis fixées aux fourchettes 23 par vissage.

Le montage du module de porte 5 sur la porte 1 s'effectue de la manière suivante, le médaillon 32, la patte 24 et la serrure 30 ainsi que le système (33, 34) de commande d'ouverture intérieure et de verrouillage étant préalablement désolidarisés du reste du panneau 20.

Les rails 7, 8 sont placés dans leur position d'écartement maximum du panneau d'étanchéité 20, le lève-vitre 6 étant retenu dans cette position écartée par appui de la tête 18a du goujon 18 sur la collerette du trou 17 de la patte 24. De plus les vis 19 ou les moyens de fixation retenus sont dévissées de manière à laisser un intervalle entre leur tête et les profilés supports 22.

L'opérateur introduit les extrémités supérieures des rails 7, 8 dans l'ouverture 4 et leur fait franchir le bandeau 14 afin que les parties supérieures des rails 7, 8 se retrouvent derrière celui-ci, au-dessus du bord inférieur 14a.

Ensuite l'opérateur fait remonter le lève-vitre 6 à l'intérieur de la porte 1, en direction du puits de vitre 10 jusqu'à ce que les tiges des vis 19 viennent s'introduire dans les encoches 24, tandis que les extrémités inférieures des rails 7, 8 se trouvent au niveau du bord inférieur 4a de l'ouverture 4. Enfin l'opérateur fait basculer les rails 7, 8 et l'ensemble du module 5 de façon à faire franchir le bord inférieur 4a par les rails 7, 8, qui sont alors entièrement introduits dans le volume intérieur de la porte 1. Pour serrer les vis 19 sur les fourchettes 23, l'opérateur a la facilité d'accès aux fourchettes 23, le médaillon 32 constituant une trappe de visite. Après cette manoeuvre, la serrure 30 portée par la patte 24 fixée au médaillon 32 est introduite derrière le panneau intérieur 3 et ensuite fixée à ce dernier.

Finalement le module de porte 5 vient dans sa position finale d'assemblage à la porte 1,sa partie restée à l'extérieur de celle-ci pouvant être fixée par tout moyen approprié au panneau intérieur 3, notamment au moyen des boulons 26 et des écrous 27.

Il est également possible de mettre en place et d'assembler le module 5 à la porte 1 avec le médaillon 32, la serrure 30 et la commande d'ouverture intérieure 33. Ces éléments sont mis en une seule fois.

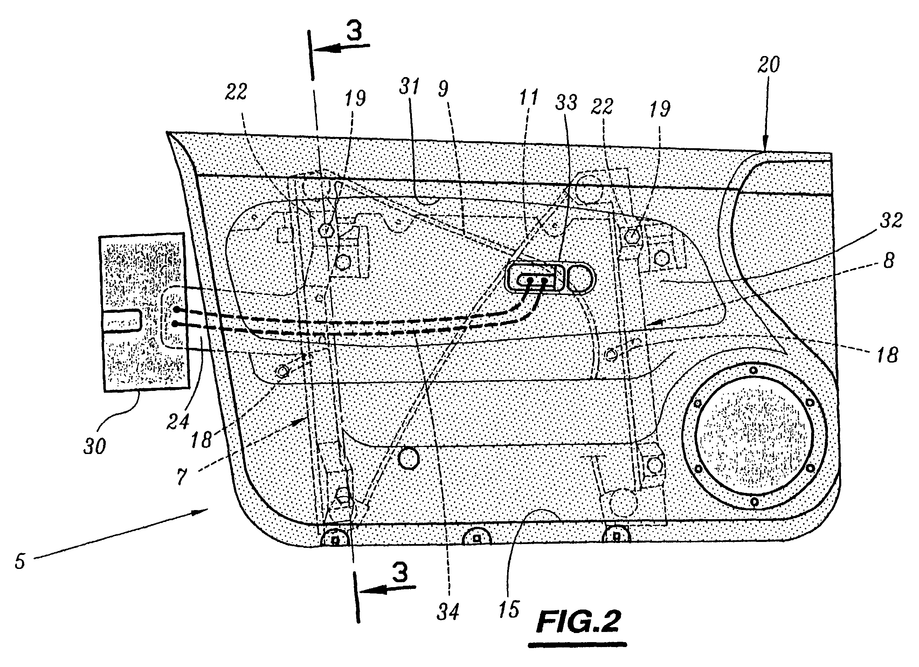

Après assemblage du module de porte 5 à la porte 1, l'ensemble se présente sous la forme illustrée à la figure 2. Le moteur (non représenté) du lève-vitre 6 peut être fixé soit au rail 7, soit au panneau intérieur d'étanchéité 20 par des moyens connus en soi et non représentés.

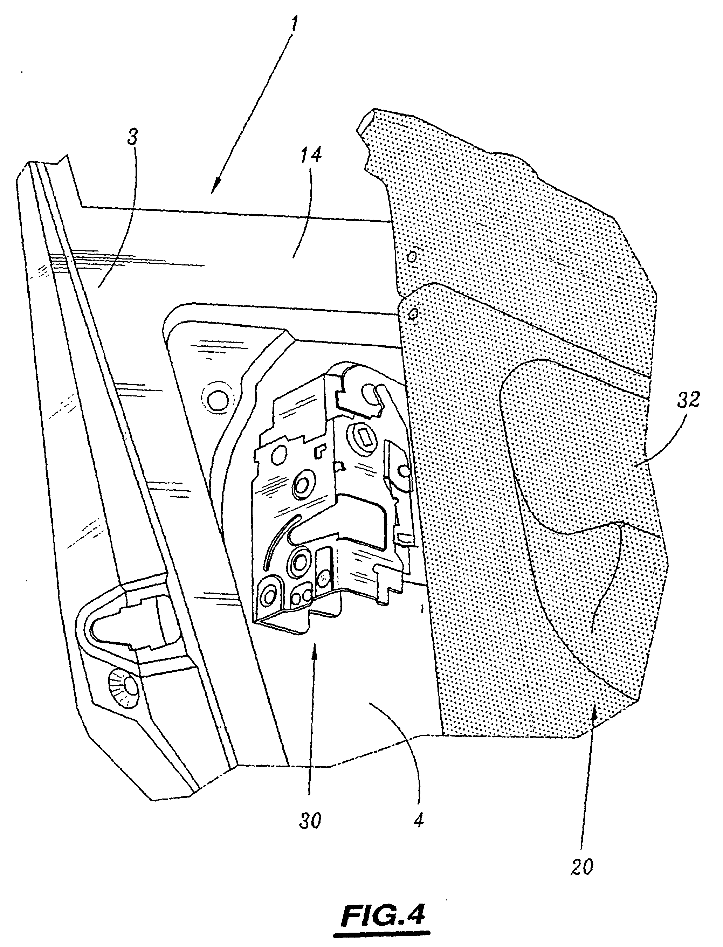

Si une fois l'assemblage du module 5 à la porte 1 exécuté, l'opérateur a besoin d'intervenir sur la serrure 30, il peut aisément séparer le médaillon 32 du reste du panneau 20 qui demeure fixé à la porte 1. L'extraction du médaillon 32 entraîne les pièces qui en sont solidaires, c'est à dire la commande d'ouverture intérieure 33, la tringlerie 34 et la serrure 30. Cette extraction est obtenue par un mouvement initial latéral pour dégager la serrure 30 du panneau intérieur 3 jusqu'à la position illustrée à la figure 4, dans laquelle elle peut être entièrement retirée de la porte. La manoeuvre inverse de remise en place s'effectue de la même façon.

L'ouverture du médaillon 32 permet l'accès au moteur, au lève-vitre et au système électronique en vue d'un éventuel remplacement de celui-ci.

Le médaillon 32 peut posséder sur son pourtour un joint d'étanchéité de type connu en soi et issu d'un matériau souple afin de permettre son écrasement.

Le goujon 18 de retenue peut être disposé avantageusement aux parties supérieures des rails 7, 8 au-dessus du médaillon 32.

Selon une variante de réalisation moins avantageuse que celle illustrée à la figure 2, le dispositif de commande d'ouverture intérieure 33 peut être monté sur la partie supérieure du panneau de garnissage 20, au niveau du bandeau 14.

## Revendications

1. Porte (1) de véhicule dans la face intérieure de laquelle est agencée une ouverture latérale (4), comprenant un module (5) de porte muni d'équipements dont une serrure (30) et un lève-vitre (6) à au moins un rail (7, 8) de guidage de câbles (9, 11), ce module comportant un panneau intérieur (20) de garnissage sur lequel sont montés lesdits équipements, **caractérisé en ce que** dans la partie supérieure du panneau (20) est ménagée une ouverture (31) sur le pourtour de laquelle peut s'appliquer de manière amovible un médaillon (32) complémentaire constitutif dudit panneau, et auquel est fixé un support (24) de la serrure (30).

2. Porte selon la revendication 1, **caractérisée en ce que** le support est une patte latérale (24) solidarisée avec le médaillon (32) et sur l'extrémité de laquelle est montée la serrure (30).

3. Porte selon la revendication 1 ou 2, **caractérisée en ce qu'**elle comprend une commande d'ouverture intérieure (33) de la serrure (30) reliée à celle-ci par une tringlerie d'actionnement (34), et qui est montée sur la partie supérieure du panneau (20) de garnissage.

4. Porte selon la revendication 1 ou 2, **caractérisée en ce qu'**elle comprend une commande d'ouverture intérieure (33) de la serrure (30) montée sur le médaillon (32) et reliée à la serrure (30) par une tringlerie d'actionnement (34).

5. Porte selon l'une des revendications précédentes, dans laquelle le rail (7, 8) du lève-vitre est relié au panneau (20) avec possibilité de débattement de la partie supérieure du rail dans le sens transversal, **caractérisée en ce que** le médaillon (32) est pourvu d'un goujon transversal (18) de retenue du lève-vitre (6), fixé au médaillon et qui peut coulisser dans une lumière (17) agencée dans la partie supérieure du rail (7), lequel peut glisser sur le goujon en étant écarté ou rapproché du médaillon.

6. Porte selon l'une des revendications 1 à 4, dans laquelle le rail (7, 8) du lève-vitre (6) est relié au panneau (20) avec possibilité de débattement de la partie supérieure du rail dans le sens transversal, **caractérisée en ce que** la partie supérieure du panneau (20) au-dessus du médaillon (32) est pourvue d'un goujon transversal de retenue du lève-vitre, fixé au panneau et qui peut coulisser dans une lumière agencée à l'extrémité supérieure du rail, lequel peut glisser sur le goujon en étant écarté ou rapproché du panneau.

7. Porte selon l'une des revendications 1 à 6, **caractérisée en ce que** le médaillon (32) est muni sur son pourtour d'un joint d'étanchéité issu d'un matériau souple.

## Patentansprüche

1. Fahrzeugtür (1), in deren Innenseite eine seitliche Öffnung (4) ausgebildet ist, wobei die Tür ein Türmodul (5) umfasst, das mit Vorrichtungen versehen ist, die ein Schloss (30) und einen Fensterheber (6) mit wenigstens einer Schiene (7, 8) zur Führung von Seilen (9, 11) umfassen, wobei dieses Modul eine innere Verkleidungsplatte (20) aufweist, an der die Vorrichtungen angebracht sind, **dadurch gekennzeichnet, dass** in dem oberen Teil der Platte (20) eine Öffnung (31) ausgebildet ist, an deren Umfang ein für die Platte konstitutiver, komplementärer Einsatz (32) lösbar angebracht ist, an dem ein Träger (24) des Schlosses (30) befestigt ist.

2. Tür nach Anspruch 1, **dadurch gekennzeichnet, dass** der Träger ein seitlicher Ansatz (24) ist, der mit dem Einsatz (32) fest verbunden ist und an dessen Ende das Schloss (30) angebracht ist.

3. Tür nach Anspruch 1 oder 2, **dadurch gekennzeichnet, dass** sie ein inneres Öffnungsbetätigungselement (33) für das Schloss (30) umfasst, das mit diesem über eine Betätigungsstange (34) verbunden ist und der am oberen Teil der Verkleidungsplatte (20) angebracht ist.

4. Tür nach Anspruch 1 oder 2, **dadurch gekennzeichnet, dass** sie ein inneres Öffnungsbetätigungselement (33) für das Schloss (30) umfasst, das an dem Einsatz (32) angebracht und mit dem Schloss (30) durch eine Betätigungsstange (34) verbunden ist.

5. Tür nach einem der vorhergehenden Ansprüche, in der die Fensterheber-Schiene (7, 8) mit der Platte (20) so verbunden ist, dass der obere Teil der Schiene in Querrichtung ausschlagen kann, **dadurch gekennzeichnet, dass** der Einsatz (32) mit einem transversalen Fensterheber-Haltebolzen versehen ist, der an der Platte befestigt ist und in einem Langloch gleiten kann, das im oberen Ende der Schiene ausgebildet ist, die ihrerseits an dem Bolzen gleiten kann, indem sie von der Platte weggeführt oder zu der Platte hingeführt wird.

6. Tür nach einem der vorhergehenden Ansprüche 1 bis 4, in der die Fensterheber-Schiene (7, 8) mit der Platte (20) so verbunden ist, dass der obere Teil der Schiene in Querrichtung ausschlagen kann, **dadurch gekennzeichnet, dass** der obere Teil der Platte (20) über dem Einsatz (32) mit einem transversalen Fensterheber-Haltebolzen versehen ist, der an der Platte befestigt ist und in einem Langloch gleiten kann, das im oberen Ende der Schiene ausgebildet ist, die ihrerseits an dem Bolzen gleiten kann, indem sie von der Platte weggeführt oder zu der Platte hingeführt wird.

7. Tür nach einem der Ansprüche 1 bis 6, **dadurch gekennzeichnet, dass** der Einsatz (32) an seinem Umfang mit einer aus einem weichen Werkstoff gebildeten Dichtung versehen ist.

## Claims

1. Vehicle door (1), in the inner face of which a lateral opening (4) is provided, comprising a door module (5) which is provided with equipment including a lock (30) and a window mechanism (6) having at least one rail (7, 8) for guiding cables (9, 11), this module comprising an inner lining panel (20), on which that equipment is mounted, **characterised in that** there is provided in the upper portion of the panel (20) an opening (31), to the periphery of which a complementary panel (32) can be removably applied which constitutes the panel and to which a support (24) for the lock (30) is fixed.

2. Door according to claim 1, **characterised in that** the support is a lateral tab (24) which is fixedly joined to the panel (32) and on the end of which the lock (30) is mounted.

3. Door according to claim 1 or 2, **characterised in that** it comprises an interior opening control (33) for the lock (30) which is connected to the lock (30) by an actuation linkage (34) and which is mounted on the upper portion of the lining panel (20).

4. Door according to claim 1 or 2, **characterised in that** it comprises an interior opening control (33) for the lock (30) which is mounted on the panel (32) and which is connected to the lock (30) by an actuation linkage (34).

5. Door according to any one of the preceding claims, in which the rail (7, 8) of the window mechanism is connected to the panel (20) with optional displacement of the upper portion of the rail in the transverse direction, **characterised in that** the panel (32) is provided with a transverse stud (18) for retaining the window mechanism (6), which stud (18) is fixed to the panel and which can slide in an aperture (17) provided in the upper portion of the rail (7), which can slide on the stud whilst being moved away from or towards the panel.

6. Door according to any one of claims 1 to 4, in which the rail (7, 8) of the window mechanism (6) is connected to the panel (20) with optional displacement of the upper portion of the rail in the transverse direction, **characterised in that** the upper portion of the panel (20) above the panel (32) is provided with a transverse stud for retaining the window mechanism, which stud is fixed to the panel and which can slide in an aperture provided at the upper end of the rail, which can slide on the stud whilst being moved away from or towards the panel.

7. Door according to any one of claims 1 to 6, **characterised in that** the panel (32) is provided at the periphery thereof with a sealing joint which is produced from a flexible material.
